# EUROPÄISCHE PATENTSCHRIFT

(11) **EP 1 010 713 B1**
(45) Veröffentlichungstag und Bekanntmachung des Hinweises auf die Patenterteilung: **18.06.2003**
(21) Anmeldenummer: 99124922.8
(22) Anmeldetag: 14.12.1999
(51) Int. Cl.: C08G 69/14, C08G 69/36, D01F 6/60

(54) **Verfahren zur Herstellung von Polyamid 6 für Spinnzwecke**
Method for preparing polyamide 6 for spinning
Procédé de préparation de polyamide 6 pour le filage

(30) Priorität: 17.12.1998 DE 19858365
(43) Veröffentlichungstag der Anmeldung: 21.06.2000
(73) Patentinhaber: INVENTA-FISCHER AG, 8002 Zürich (CH)
(72) Erfinder: Liedloff, Hanns-Jörg, Dr.rer.nat., 7013 Domat/Ems (CH)
(74) Vertreter: Becker Kurig Straus

(56) Entgegenhaltungen:
- EP-A- 1 004 611
- EP-B- 0 644 959
- DE-A- 19 537 614
- DE-A- 19 722 135

## Beschreibung

Die vorliegende Erfindung betrifft den in den Patentansprüchen angegebenen Gegenstand.

Insbesondere betrifft die Erfindung ein Verfahren zur Herstellung von Polyamid 6 durch hydrolytische Polymerisation von Caprolactam (Ia) oder Polykondensation von ε-Aminocapronsäure (Ib) in Gegenwart der unten näher spezifizierten Komponenten II bis VI, ferner aus den Komponenten Ia/b bis VI zugängliches Polyamid 6, in dem die Komponenten II bis VI über Amidbindungen an die Polymerkette gebunden sind sowie die Verwendung dieser Polyamide zur Herstellung von Fäden, wobei darunter Filamente und Stapelfasern zu verstehen sind.

Für die Herstellung von Fäden und deren Weiterverarbeitung zu textilen Endprodukten hat innerhalb der Gruppe der aus Lactamen mit 6 bis 12 C-Atomen oder ω-Aminocarbonsäuren mit 6 bis 12 C-Atomen zugänglichen aliphatischen Polyamide das Polycaprolactam (PA 6) eine überragende wirtschaftliche und technische Bedeutung. Obwohl PA 6 insgesamt eine sehr gute Verarbeitungscharakteristik und gute textile Eigenschaften aufweist, haben Fortschritte in der Spinnereitechnik in jüngster Zeit die Verbesserung dieses Polymeren in Richtung höherer Spinngeschwindigkeiten und verminderter Spinnabfälle notwendig gemacht. Parallel dazu ist aus den spezifischen Anforderungen bestimmter Endanwendungen der Bedarf nach hitze- und lichtstabilem PA 6 entstanden.

Eine Reihe von Patentanmeldungen befaßt sich mit der Lösung der oben skizzierten Problemstellungen. So betrifft die EP 644 959 B1 schnellgesponnene Fäden auf Basis von Polycaprolactam, wobei die Polymerherstellung in Gegenwart mindestens einer Dicarbonsäure und gegebenenfalls unter Zusatz verschiedener aminofunktioneller Komponenten zur Verbesserung der Anfärbbarkeit gegenüber anionischen Farbstoffen durchgeführt wird. Die aminofunktionellen Komponenten wirken dabei ebenso wie die Dicarbonsäuren als Kettenregler.

Auf witterungsstabile Polyamide und Verfahren zu deren Herstellung zielt die DE 197 22 135 A1 ab. Erreicht wird die Witterungsstabilität dabei durch Polykondensation der polyamidbildenden Komponenten in Gegenwart eines 4-Amino-2,2,6,6-tetraalkylpiperidins und eines in 4-Stellung zur OH-Gruppe funktionalisierten 2,6-Dialkylphenols, dessen zweite funktionelle Gruppe eine Carboxylgruppe oder eine primäre Aminogruppe ist. In einer weiteren Ausführungsform beschreibt DE 197 22 135 A1 aus Lactamen oder ω-Aminocarbonsäuren zugängliche Polyamide, die neben den anderen Kettenreglern auch Tri- oder Tetracarbonsäuren enthalten.

Die hitze- und/oder lichtstabilisierende Wirkung der oben genannten, in 4-Stellung zur OH-Gruppe funktionalisierten 2,6-Dialkylphenole auf Polyamide ist in der FR-PS 155 350, der DE-OS 22 37 849 und in der JP 4 159 327 beschrieben.

Von den oben aufgeführten Dokumenten erlaubt die DE-19 722 135 A1 die Herstellung von Polyamid 6, das sich für das Schnellspinnen eignet und gleichzeitig eine verbesserte Hitze-, Licht- und Witterungsstabilität neben guter Anfärbbarkeit gegenüber sauren Farbstoffen aufweist.

Die erreichbaren Wickel- bzw. Spinngeschwindigkeiten von 5000 bis 6000 m/min und die hohe Spinnsicherheit in diesem Geschwindigkeitsbereich heben den Nachteil der vergleichsweise hohen Rohstoffkosten dieser Produkte bei weitem auf und machen ihre kommerzielle Verwendung wirtschaftlich.

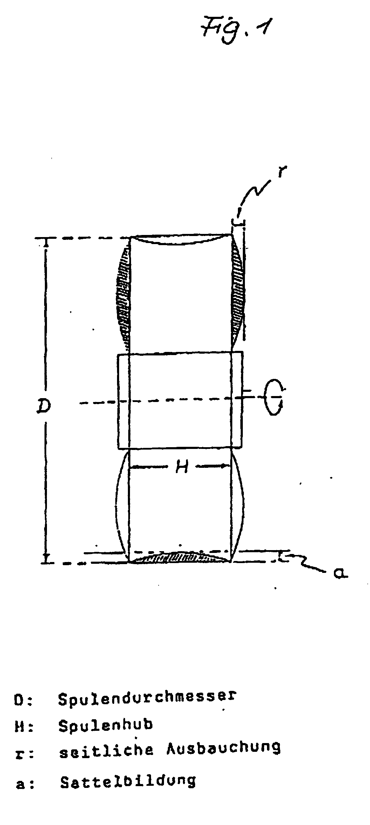

Den in der Praxis einstellbaren Wickel- bzw. Spinngeschwindigkeiten sind allerdings nach oben hin Grenzen gesetzt, die mit der Gleichmäßigkeit des Spulenaufbaus zusammenhängen. Beim Schnellspinnen von Polyamid 6 ist allgemein der Effekt zu beobachten, daß mit zunehmender Spinngeschwindigkeit die seitlichen Ausbauchungen (r) und die Sattelbildung (a) an den Spulen zunehmen. Von diesem ungünstigen Effekt, der in Fig. 1 schematisch dargestellt ist, sind unter anderem die nach DE 19 722 135 A1 zugänglichen Polyamid 6-Typen betroffen.

Die Gleichmäßigkeit des Spulenaufbaus hat unmittelbare Auswirkungen auf alle weiteren Verarbeitungsschritte. So erleichtert ein guter Spulenaufbau bereits den Transport der Spulen. Die Transportschäden an den Spulen und die dadurch bedingten Abfälle sind bei Spulen mit gutem Aufbau geringer als bei solchen mit schlechtem. Daß alle übrigen Verarbeitungsschritte durch einen guten Spulenaufbau ebenfalls erleichtert werden, liegt auf der Hand.

Ein Überblick zur Problematik des Spulenaufbaus findet sich im Artikel "Bessere Spinnspulen mit der Stufenpräzisionswicklung" von Dr. F. Maag (Sonderdruck Chemiefasern/Textilindustrie 35/87 (Juni 1985)). Der Autor geht dort die Lösung der betreffenden Probleme von der technischen Seite an, indem er eine besondere Wicklersteuerung vorschlägt. Mit der fortschreitenden Perfektionierung und Leistungssteigerung der Spinntechnik ist in bezug auf den Spulenaufbau auch die Notwendigkeit zu polymerseitigen Verbesserungen entstanden.

In der US-PS 4,863,664, welche einen verbesserten Hochgeschwindigkeitsprozeß zur Herstellung von Polyamid 6 und 66-Filamenten betrifft, wird die Verbesserung des Spulenaufbaus (und weiterer Eigenschaften) durch die Zugabe von Wasser, Alkoholen oder Carbonsäuren zum verarbeitungsfertigen Polymer erreicht. Dieses Verfahren löst zwar die gestellten Aufgaben, hat aber den Nachteil, daß für die Zugabe der oben genannten Additive Dosier- und Mischaggregate benötigt werden, die den Spinnprozeß insgesamt komplizierter und störungsanfälliger machen.

Die Aufgabe der vorliegenden Erfindung besteht deshalb darin, Polyamid 6 für das Hochgeschwindigkeitsspinnen bzw. schnellgesponnene Fäden bereitzustellen, aus dem sich bei hohen Spinngeschwindigkeiten, auch ohne die nachträgliche Zugabe von Additiven, Spulen mit verbessertem Aufbau herstellen lassen.

Diese Aufgabe wird durch das Verfahren gemäß Anspruch 1 bzw. durch das Polyamid 6 nach Anspruch 5 sowie dessen Verwendung nach Anspruch 6 gelöst.

Überraschenderweise gelang die Lösung dieser Aufgabe durch den vor Beginn oder während der Polymerisation von (Ia) bzw. Polykondensation von (Ib) erfolgten Zusatz einer Dicarbonsäure (II) und eines Dialkylphenols (IV) neben gegebenenfalls Monocarbonsäuren (II) sowie gegebenenfalls den weiteren Komponenten (V) und (VI), wobei von den beiden letztgenannten Komponenten mindestens eine bei der Polymerisation bzw. Polykondensation vorhanden ist.

Dabei ist die Komponente (IV) ein Dialkylphenol, Komponente (V) ein aliphatisches oder cycloaliphatisches Diamin, welches eine primäre und eine tertiäre Aminogruppe trägt, und Komponente (VI) ein aliphatisches oder cycloaliphatisches oder araliphatisches, verzweigtes oder geradkettiges Diamin mit zwei primären Aminogruppen und 4 bis 26 Kohlenstoffatomen.

Die Erfindung betrifft daher ein Verfahren zur Herstellung von Polyamid 6, das durch hydrolytische Polymerisation von Caprolactam (Ia) oder Polykondensation von ε-Aminocapronsäure zugänglich ist, wobei die Polymerisation bzw. Polykondensation in Gegenwart von
- 0,05 bis 0,7 Gew.-% Dicarbonsäure (II),
- 0 bis 0,7 Gew.-% Monocarbonsäure (III),
- 0,05 bis 0,7 Gew.-% Dialkylphenol (IV),
- 0 bis 0,5 Gew.-% eines aliphatischen oder cyclophatischen Diamins (V), welches eine primäre und eine tertiäre Aminogruppe trägt,
- 0 bis 0,7 Gew.-% eines aliphatischen oder cycloaliphatischen oder araliphatischen, verzweigten oder geradkettigen Diamins (VI) mit zwei primären Aminogruppen und 4 bis 26 Kohlenstoffatomen
durchgeführt wird, wobei sich die Mengen der Komponenten (Ia/b) und (II) sowie (III) bis (VI) zu 100 Gew.-% ergänzen, neben den Komponenten (Ia/b), (II) und (IV) mindestens eine der Komponenten (V) und (VI) enthalten ist und die Komponenten (II) bis (VI) über Amidbindungen an die Polymerkette gebunden sind.

Das Dialkylphenol (IV) ist ein in 4-Stellung zur OH-Gruppe funktionalisiertes 2,6-Dialkylphenol der folgenden Formel 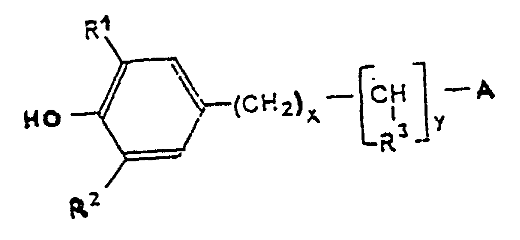 worin R¹ und R² gleiche oder verschiedene Alkylreste mit 1 bis 6 C-Atomen sind, R³ entweder ein Wasserstoffatom oder eine Methylgruppe ist, die funktionelle Gruppe A entweder eine freie Carboxylgruppe oder eine mit C₁-C₄-Alkoholen veresterte Carboxylgruppe oder eine primäre Aminogruppe darstellt, für x und y im Fall der Aminogruppe die Wertekombinationen (x = 2/y = 1); (x = 2/y = 0); (x = 1/y = 0) und (x = 0/y = 1) möglich sind und im Fall der freien oder veresterten Carboxylgruppe y und y zusätzlich jeweils 0 sein können.

Ferner betrifft die Erfindung Polyamid 6, dadurch gekennzeichnet, daß es im wesentlichen aus Caprolactam (Ia) oder oder ε-Aminocapronsäure (Ib),
- 0,05 bis 0,7 Gew.-% Dicarbonsäure (II),
- 0 bis 0,7 Gew.-% Monocarbonsäure (III)
- 0,05 bis 0,7 Gew.-% Dialkylphenol (IV)
- 0 bis 0,5 Gew.-% eines aliphatischen oder cycloaliphatischen Diamins (V), welches eine primäre und eine tertiäre Amingruppe trägt,
- 0 bis 0,7 Gew.-% eines aliphatischen oder cycloaliphatischen oder araliphatischen, verzweigten oder geradkettigen Diamins (VI) mit zwei primären Aminogruppen und 4 bis 26 Kohlenstoffatomen
zugänglich ist, wobei sich die Mengen der Komponenten (Ia/b) und (II) sowie (III) bis (VI) zu 100 Gew.-% ergänzen, neben den Komponenten (Ia/b), (II) und (IV) mindestens eine der Komponenten (V) und (VI) enthalten ist und die Komponenten (II) bis (VI) enthalten ist und die Komponenten (II) bis (VI) über Amidbindungen an die Polymerkette gebunden sind.

Schließlich betrifft die Erfindung Polyamid 6 zur Herstellung von Fäden, insbesondere schnellgesponnenen Fäden.

Die vorteilhafte Wirkung der Dicarbonsäure (II) und des Dialkylphenols (IV), welche gegebenenfalls zusammen mit einer Monocarbonsäure (III) und mindestens einer der Komponenten (V) und (VI) bei der Polymerisation von (Ia) bzw. Polykondensation von (Ib) zugesetzt werden, auf den Spulenaufbau ist neu und gemessen am Stand der Technik völlig unerwartet.

Als Dicarbonsäuren (II) können geradkettige oder verzweigte aliphatische oder cycloaliphatische, auch stickstoffhaltige Dicarbonsäuren mit 6 bis 36 Kohlenstoffatomen genauso gut verwendet werden wie substituierte oder unsubstituierte aromatische Dicarbonsäuren mit 8 bis 18 Kohlenstoffatomen. Von den beiden Untergruppen der Dicarbonsäuren sind Adipinsäure, Azelainsäure, Sebazinsäure, Dodecandisäure, die Trimethyl-adipinsäuren und cis- und/oder trans-Cyclohexan-1,4-dicarbonsäure bzw. Terephthalsäure, Isophthalsäure, Naphthalin-1,6-dicarbonsäure und Diphenyl-4,4-dicarbonsäure besonders bevorzugt.

Als Monocarbonsäuren (III) können geradkettige oder verzweigte aliphatische oder cycloaliphatische sowie aromatische Monocarbonsäuren mit 2 bis 18 Kohlenstoffatomen verwendet werden.

Als Dialkylphenole (IV) werden die oben spezifizierten, in 4-Stellung zur OH-Gruppe funktionalisierten 2,6-Dialkylphenole verwendet.

Als Diamine (V), die eine primäre und eine tertiäre Aminogruppe tragen, werden besonders bevorzugt diejenigen aus der Gruppe, bestehend aus 3-(Dialkylamino)-1-propylamin, 2-Dialkylamino-1-ethylamin, Piperidino- und Pyrrolidinoalkylaminen sowie 4-Amino-1,2,2,6,6-pentaalkylpiperidin verwendet.

Als Diamine (VI) können geradkettige oder verzweigte aliphatische Diamine mit 4 bis 13 Kohlenstoffatomen und jeweils zwei primären Aminogruppen, cycloaliphatische Diamine mit 6 bis 26 Kohlenstoffatomen und jeweils zwei primären Aminogruppen und araliphatische Diamine (aromatisch/aliphatisch) mit 8 bis 26 Kohlenstoffatomen und jeweils zwei mit aliphatischen C-Atomen verknüpften primären Aminogruppen verwendet werden.

Von den drei Untergruppen der Diamine sind Hexamethylendiamin (1,6-Diaminohexan), 1,10-Diaminodecan, 1,12-Diaminododecan, 1,4-Diaminobutan, 2,2,4- und/oder 2,4,4-Trimethyl-1,6-diaminohexan bzw. cis- und/oder trans-1,4-Diaminocyclohexan, cisund/oder trans-1,4-Bis(aminomethyl)-cyclohexan, 3-Amino-3,5,5-trimethylcyclohexylamin, die isomeren Bis-(4-amino-3-methylcyclohexyl)methane und die isomeren 2,2-Bis-(4-aminocyclohexyl)propane bzw. 1,3- und 1,4-Bis-(aminomethyl)benzol besonders bevorzugt.

Die nach dem erfindungsgemäßen Verfahren zugänglichen Polyamide können grundsätzlich in chargenweise oder kontinuierlich arbeitende Reaktoren durch Polymerisation oder Polykondensation hergestellt werden.

Die Komponenten (II) bis (VI) können an geeigneter Stelle in den jeweiligen Herstellprozeß eingebracht werden, wobei die Carbonsäure (II, III und ggf. IV) und die Amine (V, VI und ggf. IV) in reiner Form oder gelöst (Lösungsmittel: Wasser, Caprolactam) zugegeben werden können. Die Zugabe dieser Komponenten ist meist unproblematisch und kann gemeinsam, getrennt bzw. nacheinander, vor oder während der Polymerisation bzw. Polykondensation erfolgen.

Dem nach dem erfindungsgemäßen Verfahren zugänglichen Polyamid 6 können die üblichen Mattierungsmittel auf Titandioxid-Basis vor oder während der Polymerisation bzw. Polykondensation zugesetzt werden.

Die Herstellung des erfindungsgemäßen PA 6 erfolgt nach kontinuierlichen oder chargenweisen Verfahren, wie sie seit langem bekannt sind. Bei den kontinuierlichen Verfahren zur Herstellung von Polyamid 6 ist zwischen ein-, zwei- und mehrstufigen Verfahren, offenen oder geschlossenen Rohrreaktoren (VK-Rohren) zu unterscheiden.

Die Entfernung von nicht umgesetztem Caprolactam sowie Oligomeren aus dem Polymerisat erfolgt auf bekannte Weise durch Heißwasserextraktion von Granulat, entweder kontinuierlich nach dem Gegenstromprinzip oder chargenweise. Die Extraktion kann auch durch Behandlung der Polymerschmelze in Dünnschichtverdampfern oder Zwei- bzw. Mehrschneckenextrudern unter vermindertem Druck erfolgen, wodurch ebenfalls eine weitgehende Entmonomerisierung erreicht wird.

Die nachfolgenden Beispiele erläutern die Erfindung.

Das nach dem erfindungsgemäßen Verfahren hergestellte Polyamid 6 und der zum Vergleich herangezogene Polyamid 6-Typ des Standes der Technik wurden nach einem kontinuierlichen Polymerisationsverfahren in einer industriellen Anlage mit einem Durchsatz von ca. 10,8 Tagestonnen hergestellt. Das Kernstück der Polymerisationseinheit ist ein sogenanntes geschlossenes VK-Rohr, dessen Funktionsweise im wesentlichen in der CH-PS 3 181 68 beschrieben ist. Das Caprolactam (T = 85°C) und die darin gelösten übrigen Komponenten, einschließlich der für die Einstellung der Viskosität benötigten Wassermenge werden aus einem Vorlagegefäß in das VK-Rohr gepreßt, wo bei einem bestimmten Temperaturprofil und bei einem durch die Pumpgeschwindigkeit gegebenen Durchsatz die Polymerisation erfolgt. Eine Beschreibung dieser Verfahrensweise findet sich ebenfalls in der CH-PS. In allen Fällen lag die maximale Produkttemperatur in der Reaktionszone bei 278 bis 280°C, die Temperatur der Polyamid 6-Schmelze am Reaktorausgang betrug 248 bis 250°C. Bei einem Durchsatz von 430 kg/Stunde lag die mittlere Reaktorverweilzeit bei 16,5 Stunden.

Die -Polyamid-6-Schmelze wurde in Form von Polymersträngen aus dem VK-Rohr abgepreßt, beim anschließenden Durchlaufen eines Wasserbades abgekühlt und dann granuliert. Das Granulat wurde dann einer kontinuierlichen Extraktionskolonne zugeführt, wo es im Gegenstrom bei etwas mehr als 100°C mit Wasser auf einen niedrigen Gehalt an Caprolactam und cyclischen Oligomeren (DI- und Trimer) extrahiert wurde. Das extrahierte Granulat wurde schließlich auf einen Restwassergehalt von ca. 0,03 bis 0,08 Gew.-% getrocknet und dann abgefüllt.

Die Lösungsviskosität von extrahiertem und getrocknetem Polyamid 6 wurde in 1,0 Gew.-%iger Lösung in Schwefelsäure (96%ig) bei 20°C bestimmt.

Die Bestimmung der Endgruppen-Konzentrationen erfolgte mittels acidimetrischer Titration. Die Aminoendgruppen wurden in m-Kresol/iso-Propanol-2:1 (Gew.-Teile) als Lösungsmittel mit 0,1-normaler ethanolischer Perchlorsäure titriert. Die Titration der Carboxylendgruppen erfolgte in Benzylalkohol als Lösungsmittel mit 0,1-normalem benzylalkoholischem Kaliumhydroxid.

Die in den Beispielen verwendeten Abkürzungen haben folgende Bedeutung:
- LC-6:: Caprolactam
- TPA:: Terephthalsäure
- TAD:: Triacetondiamin = 4-Amino-2,2,6,6-tetramethylpiperidin
- DEAPA:: 3-Diethylamino-1-propylamin
- DBHPP:: 3-(3,5-Di-tert-butyl-4-hydroxyphenyl)-propionsäure
- [C]:: Carboxylendgruppenkonzentration in meq/kg
- [A]:: Aminoendgruppenkonzentration in meq/kg
- RV:: Relative Lösungsviskosität in 1,0 Gew.-%iger Lösung in Schwefelsäure (96 %ig) bei 20 °C
- r:: seitliche Ausbauchung der Spulen in mm (s. Fig. 1)
- a:: Sattelbildung an den Spulen in mm (s. Fig. 1)
- D:: Spulendurchmesser in mm (s. Fig. 1)
- H:: Spulenhub in mm (s. Fig. 1)
- S1 ...8:: Spule Nr. 1 bis 8

### Bezugsquellen von Rohstoffen:

- TAD:: Hüls AG; Marl (Deutschland)
- DEAPA:: Hoechst Werk Ruhrchemie; Oberhausen (Deutschland)
- DBHPP:: Ciba Geigy AG; Basel (Schweiz)

### 1. Polymere

In der Tabelle 1 ist das erfindungsgemäß und der zum Vergleich herangezogene Polyamid 6-Typ charakterisiert. Der Lösung der einzelnen Komponenten in Caprolactam wurde jeweils soviel Wasser zugesetzt, daß das unextrahierte Granulat eine relative Lösungsviskosität des extrahierten und getrockneten Granulats 2,42 bis 2,45 betrug. Der Wassergehalt des Caprolactams wurde bei der Einstellung des Wassergehalts der Lösung berücksichtigt.

**Tabelle 1**

| Charakterisierung des erfindungsgemäßen PA 6 und des Produktes des Standes der Technik (extrahiert und getrocknet) | | | | | | | | | |
|---|---|---|---|---|---|---|---|---|---|
| Beispiel | Rohstoffe [Gew.-%] | | | | | H₂O^{b)} [Gew.-%] | Analysen | | |
| | LC-6 | TPA | DBHPP | TAD | DEAPA | | RV | [A] | [C] |
| Vgl. 1^{a}) | 99,32 | 0,42 | 0,07 | 0,07 | 0,12 | 0,26 | 2,45 | 42 | 73 |
| 1 | 99,29 | 0,36 | 0,17 | - | 0,18 | 0,25 | 2,42 | 43 | 72 |

| | | | | | | | | | |
|---|---|---|---|---|---|---|---|---|---|
| a) Gemäß DE 197 22 135 A1 | | | | | | | | | |
| b) Bezogen auf die Gesamtmenge der organischen Bestandteile | | | | | | | | | |

### 1. Spinnversuche

Das vorgetrocknete, spinnfertige Granulat wurde mit einem Einschneckenextruder des Typs 4E4 der Firma Barmag (Remscheid/Deutschland) aufgeschmolzen. Die PA 6-Schmelzen (T = 262°C) wurden über eine mit statischen Mischorganen ausgestattete Schmelzeleitung und die entsprechenden Schmelzverteiler mittels Planetenradpumpen dem Spinnkopf zugeführt. Die Verspinnung erfolgte nach dem H4S-Prozeß der Fa. EMS Inventa AG über acht Spinnpakete, Titer 44/13 Ydtex/f, Querstromanblasung. Die Wicklergeschwindigkeit betrug jeweils 5400 m/min. Der Spulenhub H betrug 130 mm, der Hülsen-Außendurchmesser 124 mm.

Die Ergebnisse zum Spulenaufbau mit den beiden Polyamid 6-Typen sind in der Tabelle 2 zusammengestellt. Daraus geht hervor, daß der erfindungsgemäße Polyamid 6-Typ besonders in bezug auf die seitliche Ausbauchung r Vorteile gegenüber dem Produkt des Standes der Technik aufweist.

**Tabelle 2**

| Spulenaufbau mit dem erfindungsgemäßen PA 6 und dem Produkt des Standes der Technik | | | | | | | | | | | |
|---|---|---|---|---|---|---|---|---|---|---|---|
| Beispiel | PA 6-Typ | D | Spulenaufbau | | | | | | | | |
| | | | | SP1 | SP2 | SP3 | SP4 | SP5 | SP6 | SP7 | SP8 |
| Vgl.2 | Vgl.1 | 385 | r | 15 | 15 | 15 | 14 | 14 | 15 | 14 | 14 |
| | | | a | 2,2 | 2,2 | 2,0 | 2,3 | 2,1 | 2,2 | 2 | 1,8 |
| Vgl.3 | Vgl.1 | 305 | r | 9 | 9 | - | - | - | - | 9 | 9 |
| | | | a | 1,9 | 1,8 | - | - | - | - | 1,8 | 1,8 |
| 2 | 1 | 385 | r | 10 | 9 | 9 | 8 | 9 | 9 | 9 | 9 |
| | | | a | 2,4 | 2,2 | 2,2 | 2,1 | 2,2 | 2,0 | 2,1 | 2,0 |
| 3 | 1 | 305 | r | 7 | 7 | - | - | - | - | 7 | 7 |
| | | | a | 1,6 | 1,8 | - | - | - | - | 1,7 | 1,6 |

## Patentansprüche

1. Verfahren zur Herstellung von Polyamid 6 durch hydrolytische Polymerisation von Caprolactam (Ia) oder Polykondensation von ε-Aminocapronsäure (Ib), **dadurch gekennzeichnet, daß** die Polymerisation bzw. Polykondensation in Gegenwart von
- 0,05 bis 0,7 Gew.-% Dicarbonsäure (II),
- 0 bis 0,7 Gew.-% Monocarbonsäure (III),
- 0,05 bis 0,7 Gew.-% Dialkylphenol (IV),
- 0 bis 0,5 Gew.-% eines aliphatischen oder cyclophatischen Diamins (V), welches eine primäre und eine tertiäre Aminogruppe trägt,
- 0 bis 0,7 Gew.-% eines aliphatischen oder cycloaliphatischen oder araliphatischen, verzweigten oder geradkettigen Diamins (VI) mit zwei primären Aminogruppen und 4 bis 26 Kohlenstoffatomen
durchgeführt wird, wobei sich die Mengen der Komponenten (Ia/b) und (II) sowie (III) bis (VI) zu 100 Gew.-% ergänzen, neben den Komponenten (Ia/b), (II) und (IV) mindestens eine der Komponenten (V) und (VI) enthalten ist und die Komponenten (II) bis (VI) über Amidbindungen an die Polymerkette gebunden sind.

2. Verfahren gemäß Anspruch 1, **dadurch gekennzeichnet, daß** man als Dialkylphenol (IV) ein in 4-Stellung zur OH-Gruppe funktionalisiertes 2,6-Dialkylphenol der folgenden Formel 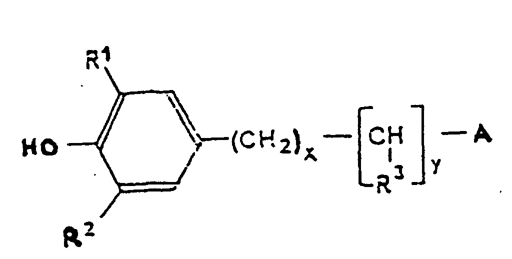 einsetzt, worin R¹ und R² gleiche oder verschiedene Alkylreste mit 1 bis 6 C-Atomen sind, R³ entweder ein Wasserstoffatom oder eine Methylgruppe ist, die funktionelle Gruppe A entweder eine freie Carboxylgruppe oder eine mit C₁-C₄-Alkoholen veresterte Carboxylgruppe oder eine primäre Aminogruppe darstellt, für x und y im Fall der Aminogruppe die Wertekombinationen (x = 2/y = 1); (x = 2/y = 0); (x = 1/y = 0) und (x = 0/y = 1) möglich sind und im Fall der freien oder veresterten Carboxylgruppe y und y zusätzlich jeweils 0 sein können.

3. Verfahren gemäß Anspruch 2, **dadurch gekennzeichnet, daß** R¹ = R² = C(CH₃)₃(t-Butyl) oder R¹ = t-Butyl und R² = Methyl ist.

4. Verfahren gemäß einem der Ansprüche 2 oder 3, **dadurch gekennzeichnet, daß** als Komponente (IV) eine Verbindung, ausgewählt aus der Gruppe der Verbindungen mit A = COOH oder A =COOCH₃ oder A = NH₂, R³ = H sowie x = 2 und y = 1, verwendet wird.

5. Polyamid 6, **dadurch gekennzeichnet, daß** es im wesentlichen aus Caprolactam (Ia) oder oder ε-Aminocapronsäure (Ib),
- 0,05 bis 0,7 Gew.-% Dicarbonsäure (II),
- 0 bis 0,7 Gew.-% Monocarbonsäure (III),
- 0,05 bis 0,7 Gew.-% Dialkylphenol (IV),
- 0 bis 0,5 Gew.-% eines aliphatischen oder cycloaliphatischen Diamins (V), welches eine primäre und eine tertiäre Amingruppe trägt,
- 0 bis 0,7 Gew.-% eines aliphatischen oder cycloaliphatischen oder araliphatischen, verzweigten oder geradkettigen Diamins (VI) mit zwei primären Aminogruppen und 4 bis 26 Kohlenstoffatomen
zugänglich ist, wobei sich die Mengen der Komponenten (Ia/b) und (II) sowie (III) bis (VI) zu 100 Gew.-% ergänzen, neben den Komponenten (Ia/b), (II) und (IV) mindestens eine der Komponenten (V) und (VI) enthalten ist und die Komponenten (II) bis (VI) enthalten ist und die Komponenten (II) bis (VI) über Amidbindungen an die Polymerkette gebunden sind.

6. Verwendung von Polyamid 6 gemäß den Ansprüchen 1 bis 5 zur Herstellung von Fäden und Flächengebilden.

7. Fäden bzw. Flächengebilde, erhältlich durch die Verwendung des Polyamid 6 gemäß Anspruch 6.

## Claims

1. A method of producing polyamide 6 through the hydrolytic polymerization of caprolactam (Ia) or the polycondensation of ε-aminohexanoic acid (Ib), **characterized in that** the polymerization or polycondensation takes place in the presence of
- 0.05 to 0.7 percent by weight of dicarboxylic acid (II),
- 0 to 0.7 percent by weight of monocarboxylic acid (III),
- 0.05 to 0.7 percent by weight of dialkylphenol (IV),
- 0 to 0.5 percent by weight of an aliphatic or cycloaliphatic diamine (V) having a primary and a tertiary amino group,
- 0 to 0.7 percent by weight of an aliphatic, cycloaliphatic or araliphatic, branched or straight-chain diamine (VI) having two primary amino groups and 4 to 26 carbon atoms,
with the quantities of the components (Ia/b) and (II), and (III) through (VI) adding up to 100 percent by weight, with at least one of the components (V) and (VI) being included in addition to the components (Ia/b), (II) and (IV), and the components (II) through (VI) being bonded to the polymer chain via amide linkages.

2. The method according to claim 1, **characterized in that** a 2,6-dialkylphenol that is functionalized in a 4 position with respect to the OH group, and has the formula 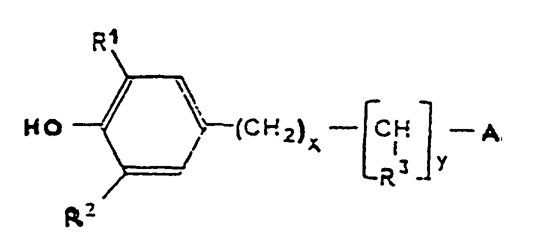 is used as dialkylphenol (IV), in which R¹ and R² are the same or different alkyl groups with 1 to 6 carbon atoms, R³ is either a hydrogen atom or a methyl group, functional group A represents either a free carboxyl group or a carboxyl group esterified with C₁ - C₄ alcohols or represents a primary amino group, in the case of the amino group, the value combinations (x = 2/y = 1); (x = 2/y = 0); (x = 1/y = 0) and (x = 0/y = 1) are possible for x and y, and in the case of the free or esterified carboxyl group, x and y can additionally each be 0.

3. The method according to claim 2, **characterized in that** R¹ = R² = C(CH₃)₃(t-butyl) or R¹ = t-butyl and R² = methyl.

4. The method according to one of claims 2 or 3, **characterized in that** a compound selected from the group of compounds with A = COOH or A =COOCH₃ or A = NH₂, R³ = H and x = 2 and y = 1 is used as the component (IV).

5. Polyamide 6, **characterized in that** it is essentially accessible from caprolactam (Ia) or ε-aminohexanoic acid (Ib),
- 0.05 to 0.7 percent by weight of dicarboxylic acid (II),
- 0 to 0.7 percent by weight of monocarboxylic acid (III),
- 0.05 to 0.7 percent by weight of dialkylphenol (IV),
- 0 to 0.5 percent by weight of an aliphatic or cycloaliphatic diamine (V) having a primary and a tertiary amino group,
- 0 to 0.7 percent by weight of an aliphatic, cycloaliphatic or araliphatic, branched or straight-chain diamine (VI) having two primary amino groups and 4 to 26 carbon atoms,
with the quantities of the components (Ia/b) and (II), and (III) through (VI) adding up to 100 percent by weight, with at least one of the components (V) and (VI) being included in addition to the components (Ia/b), (II) and (IV), and the components (II) through (VI) being bonded to the polymer chain via amide linkages.

6. The use of the polyamide 6 according to claims 1 through 5 for producing fibers and fabrics.

7. Fibers or fabrics, obtainable by the use of the polyamide 6 according to claim 6.

## Revendications

1. Procédé de préparation du polyamide 6 au moyen d'une polymérisation par hydrolyse du caprolactame (Ia) ou à l'aide d'une polycondensation de l'acide ε-aminocaproïque (Ib), **caractérisé en ce que** la polymérisation ou la polycondensation est réalisée en présence de
- 0,05 à 0,7% en poids d'un acide dicarboxylique (II),
- 0 à 0,7% en poids d'un acide monocarboxylique (III),
- 0,05 à 0,7% en poids d'un dialkylphénol (IV),
- 0 à 0,5% en poids d'une diamine aliphatique ou cycloaliphatique (V), qui porte un groupe amine primaire et un groupe amine tertiaire,
- 0 à 0,7% en poids d'une diamine aliphatique ou cycloaliphatique ou araliphatique, à chaîne droite ou ramifiée (VI) avec deux groupes amine primaire et 4 à 26 atomes de carbone,
dans lequel les quantités des composants (Ia/b) et (II) ainsi que (III) à (VI) sont complétés jusqu'à 100% en poids, au moins un des composants (V) et (VI) y est contenu en plus des composants (Ia/b), (II) et (IV) et les composants (II) à (VI) sont liés à la chaîne polymère par des liaisons amide.

2. Procédé selon la revendication 1, **caractérisé en ce que** l'on met en oeuvre comme dialkylphénol (IV), un 2,6-dialkylphénol fonctionnalisé dans la position 4 par rapport au groupe OH, de la formule suivante 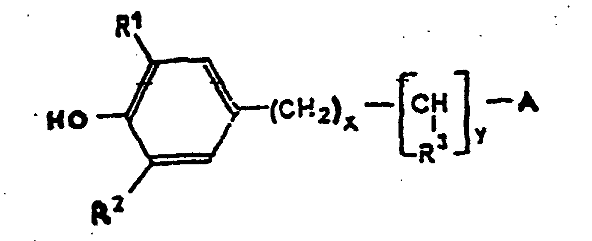 dans laquelle R¹ et R² sont des résidus alkyles identiques ou différents ayant 1 à 6 atomes de carbone, R³ est un atome d'hydrogène ou un groupe méthyle, le groupe fonctionnel A représente un groupe carboxyle libre ou un groupe carboxyle estérifié par des alcools en C₁ à C₄ ou bien un groupe amine primaire, dans le cas du groupe amine, les combinaisons de valeur (x = 2/y = 1); (x = 2/y = 0); (x = 1/y = 0) et (x = 0/y = 1) sont possibles pour x et y, et dans le cas du groupe carboxyle libre ou estérifié, x et y peuvent valoir en outre chacun 0.

3. Procédé selon la revendication 2, **caractérisé en ce que** R¹ = R² = C(CH₃)₃(t-butyle) ou R¹ = t-butyle et R² = méthyle.

4. Procédé selon l'une quelconque des revendications 2 ou 3, **caractérisé en ce qu'**un composé, choisi dans le groupe des composés ayant A = COOH ou A =COOCH₃ ou A = NH₂, R³ = H ainsi que x = 2 et y = 1, est employé en tant que composant (IV).

5. Polyamide 6, **caractérisé en ce qu'**il est accessible essentiellement en partant du caprolactame (Ia) ou de l'acide ε-aminocaproïque (Ib),
- de 0,05 à 0,7% en poids d'un acide dicarboxylique (II),
- de 0 à 0,7% en poids d'un acide monocarboxylique (III),
- de 0,05 à 0,7% en poids d'un dialkylphénol (IV),
- de 0 à 0,5% en poids d'une diamine aliphatique ou cycloaliphatique (V), qui porte un groupe amine primaire et un groupe amine tertiaire,
- de 0 à 0,7% en poids d'une diamine aliphatique ou cycloaliphatique ou araliphatique, à chaîne droite ou ramifiée (VI) avec deux groupes amine primaire et 4 à 26 atomes de carbone,
dans lequel les quantités des composants (Ia/b) et (II) ainsi que (III) à (VI) sont complétés jusqu'à 100% en poids, au moins un des composants (V) et (VI) y est contenu en plus des composants (Ia/b), (II) et (IV) et les composants (II) à (VI) sont liés à la chaîne polymère par des liaisons amide.

6. Utilisation du polyamide 6 selon les revendications 1 à 5 pour produire des fibres et des structures planes.

7. Fibres ou structures planes, pouvant être obtenue par l'emploi du polyamide 6 selon la revendication 6.
